# FASCICULE DE BREVET EUROPEEN

(11) **EP 0 787 398 B1**
(45) Date de publication et mention de la délivrance du brevet: **13.06.2001**
(21) Numéro de dépôt: 94931078.3
(22) Date de dépôt: 18.10.1994
(51) Int. Cl.: H04M 1/274

(54) **DISPOSITIF DE COMPOSITION AUTOMATIQUE DE NUMEROS DE TELEPHONE**
AUTOMATISCHE RUFNUMMERNWAHLEINRICHTUNG
AUTOMATIC TELEPHONE DIALLING DEVICE

(43) Date de publication de la demande: 06.08.1997
(73) Titulaire: FINTEL, 75008 Paris (FR)
(72) Inventeur: GORETA, Lucas, F-74000 Annecy (FR); DUROUX, Christian, F-75018 Paris (FR)
(74) Mandataire: Vidon, Patrice
(86) Numéro de dépôt international: FR9401205
(87) Numéro de publication internationale: WO9612368

(56) Documents cités:
- WO-A-92/20048
- FR-A- 2 705 853
- US-A- 4 126 768
- US-A- 4 995 077
- US-A- 5 181 744

## Description

La présente invention concerne un dispositif de composition automatique de numéros de téléphone, utilisable en combinaison avec un combiné téléphonique, l'expression "numéros de téléphone" désignant ici aussi bien les numéros d'appel classiques que des numéros complémentaires, tels que numéros de code ou d'identification de l'appelant, pouvant être transmis aussi par les lignes téléphoniques. Cette invention se rattache, de façon générale, aux domaines de l'électronique, des télécommunications et de l'informatique.

Plus particulièrement, l'invention est relative à un dispositif portatif, permettant à son possesseur de composer automatiquement un numéro de téléphone et de s'identifier de manière sûre et protégée auprès de la personne appelée ou d'un système informatique interrogé à distance, le dispositif étant notamment capable de mémoriser de façon non modifiable un ou plusieurs numéros de téléphone, et de composer ce ou ces numéros par synthèse de fréquence vocale. Ainsi une application particulière, mais non limitative de ce dispositif de composition automatique de numéros de téléphone est un système permettant au titulaire d'un compte bancaire d'interroger à distance un serveur informatique lui permettant de connaître, à tout moment, la situation de son compte, voire même d'effectuer des opérations de "télépaiement".

Pour ce genre d'applications, on a déjà envisagé des dispositifs portatifs permettant de composer automatiquement des numéros de téléphone. Un système existant se présente sous la forme d'un petit boîtier cylindrique de forme bombée, appelé aussi "jeton" en raison de sa forme, que l'utilisateur porte sur soi et qui émet une séquence sonore lorsqu'on appuie dessus. Ce boîtier contient un microprocesseur dédié, une pile, un haut-parleur et un bouton. Lorsqu'il est appliqué contre un combiné téléphonique et activé, ce "jeton" transmet sur la ligne téléphonique une musique binaire contenant une clé d'identification, non reconnaissable sans disposer du code de cryptage utilisé. A l'autre bout de la ligne téléphonique, un serveur vocal identifie la clé et consulte le compte qui lui est associé.

Ce dispositif existant donne satisfaction du point de vue du fonctionnement, mais sa concrétisation sous forme de "jeton", relativement encombrant et notamment épais, en limite le développement commercial. Or l'épaisseur du dispositif est imposée actuellement par les moyens électro-acoustiques qui y sont obligatoirement logés, ces moyens prenant la forme classique d'un petit haut-parleur avec cavité de résonance.

Des propositions ont été déjà faites, pour la réalisation de ce genre de dispositifs sous une forme relativement plate, pouvant présenter l'allure d'une carte ou d'un boîtier plat. A titre d'exemples, peuvent être ici cités le brevet US N° 4126768 (GRENZOW) - voir en particulier la figure 2 et le brevet US N° 4995077 (MALINOWSKI), ainsi que les demandes de brevet japonais publiées N° 01073847 (FUJITSU) et N° 02007649 (OMRON TATEISI ELECTRON Co) - voir leurs abrégés en anglais "Patent Abstracts of Japan".

Même si ces documents proposent des réalisations au format (longueur et largeur) d'une carte de crédit, il faut remarquer que les dispositifs correspondants utilisent encore des transducteurs électro-acoustiques du type "haut-parleur", relativement épais. Il en résulte que les dispositifs, en forme de carte, sont eux-mêmes relativement épais, et possèdent par exemple une épaisseur de plusieurs millimètres. Ainsi, ces dispositifs restent encombrants, ce qui pénalise leur rangement et leur transport. De plus, en raison de leur épaisseur, ces dispositifs ne possèdent pratiquement aucune souplesse mécanique, et par conséquent ils offrent une mauvaise résistance aux contraintes mécaniques qu'ils peuvent subir en cours de transport ou d'utilisation (un dispositif en forme de carte ayant tout avantage à être relativement souple, pour fléchir en cas de contraintes extérieures, et non pas trop rigide ce qui ne peut que provoquer sa cassure sous l'effet de contraintes extérieures).

En outre, l'utilisation de transducteurs électro-acoustiques du genre "haut-parleur" conduit à placer ces transducteurs en surface, comme l'indiquent les documents antérieurs précités. Or un tranducteur acoustique monté en surface ne convient pas, dans l'application particulière concernée ; en effet, il se crée alors un couplage mécanique indésirable entre le transducteur et le combiné téléphonique avec lequel il est mis directement en contact, ce couplage impliquant un amortissement du signal acoustique et une distorsion de ce signal.

Par rapport à ce qui précède, l'invention vise à fournir un dispositif de composition automatique de numéros de téléphone qui soit d'encombrement réduit, et en particulier d'épaisseur très faible, donc de présentation et d'utilisation plus pratiques, ce dispositif pouvant en particulier être réalisé non seulement au format mais aussi à l'épaisseur d'une carte de crédit habituelle, tout en fonctionnant convenablement du point de vue acoustique et électronique, et même en améliorant les- conditions de transmission du signal acoustique entre le dispositif et le combiné téléphonique.

On connaît, à travers le document WO-A-92/20048 (ELYSIUM AKTIEBOLAG), un dispositif de composition automatique de numéros de téléphone, réalisé au format d'une carte de crédit, comprenant une feuille résonante prenant place dans un logement ménagé à cet effet dans un corps central. La feuille résonante et les connections électriques sont portées par deux films souples qui sont collés chacun sur une face du corps central.

Cependant, l'invention se distingue clairement du dispositif précité. En effet, l'invention concerne d'une part un système selon la revendication 1, permettant de transférer commodément à distance des données d'identification, et d'autre part un dispositif selon la revendication 2, pour le transfert à distance de données d'identification destinées à un service informatique.

On obtient ainsi un dispositif qui peut réellement posséder une faible épaisseur, puisqu'il utilise des transducteurs acoustiques ne nécessitant ni cavité de résonance à proprement parler, ni cristal plus ou moins volumineux ; les feuilles résonantes constituant ces transducteurs nécessitent simplement d'être prises en sandwich entre deux plaques, en matière synthétique ou métalliques, l'une des plaques étant ajourée pour permettre la diffusion des signaux acoustiques émis vers l'extérieur, en vue de leur utilisation en association avec la partie "microphone" d'un combiné téléphonique. Le support plat, dans lequel sont insérés le ou les transducteurs acoustiques, est réalisable avantageusement au format d'une carte de crédit, et compte tenu de sa structure, le dispositif est surtout réalisable avec une épaisseur inférieure ou égale à environ un millimètre, de préférence inférieure ou égale à 0,8 millimètre, ce qui garantit faible encombrement et souplesse.

La disposition "interne" du ou des transducteurs acoustiques, et non plus en surface, résultant de l'agencement proposé, constitue aussi une caractéristique avantageuse en ce sens qu'elle résoud le problème précédemment évoqué du couplage acoustique entre le transducteur et le microphone du combiné téléphonique. Ainsi, les vibrations du transducteur acoustique sont transmises sans distorsion au microphone du combiné téléphonique, avec une amplitude et une fidélité suffisante pour que les signaux émis soient convenablement restitués, reconnus et identifiés par un central téléphonique ordinaire ou par un système d'identification spécifique.

Toutefois, le spectre de fréquence que le type de transducteur préconisé est capable d'émettre peut être relativement limité en fréquence et gain. Afin de pallier à cette difficulté, le dispositif selon l'invention comprend de préférence une pluralité de transducteurs acoustiques du même type, chaque tranducteur étant limité à une plage de fréquence, le diamètre de ce transducteur étant adapté aux fréquences à transmettre et au gain souhaité. L'utilisation combinée de plusieurs transducteurs, chacun étant constitué par une feuille résonante, contribue aussi à rendre le dispositif mécaniquement souple, comme cela est souhaité.

Pour constituer un dispositif complet, le support précité reçoit, outre le ou les transducteurs acoustiques, une touche d'actionnement pour le lancement de la numérotation automatique, des moyens de mémorisation d'au moins un numéro de téléphone et de préférence aussi d'un numéro d'identification, une source d'énergie électrique telle que pile, un processeur et au moins un amplificateur monté entre le processeur et le ou les transducteurs acoustiques. Dans le cas d'une mémorisation de plusieurs numéros de téléphone, le dispositif comporte encore un voyant multiple, apte à indiquer le numéro sélectionné. Le dispositif possède aussi avantageusement, sur une face, un afficheur apte à indiquer le nombre d'appels émis ou restant à émettre, ceci pour la bonne gestion de l'autonomie du dispositif, notamment en liaison avec une limitation d'usage de ce dispositif, en nombre d'appels ou dans le temps.

De toute façon, l'invention sera mieux comprise à l'aide de la description qui suit, en référence au dessin schématique annexé représentant, à titre d'exemples, quelques formes d'exécution de ce dispositif de composition automatique de numéros de téléphone :
Figure 1 est un schéma explicatif en perspective, illustrant le principe de réalisation du ou des traducteurs acoustiques intégrés dans un dispositif conforme à l'invention ;
Figure 2 est un schéma de principe en perspective du montage d'un transducteur dans le dispositif selon l'invention ;
Figure 3 est une vue en perspective d'un dispositif conforme à l'invention, avec plusieurs transducteurs montés selon le principe de la figure 2 ;
Figure 4 est une vue en coupe longitudinale d'un dispositif selon l'invention ;
Figure 5 est une vue de face du dispositif selon l'invention, dans un mode de réalisation pratique particulier ;
Figure 6 est un schéma synoptique de ce dispositif.

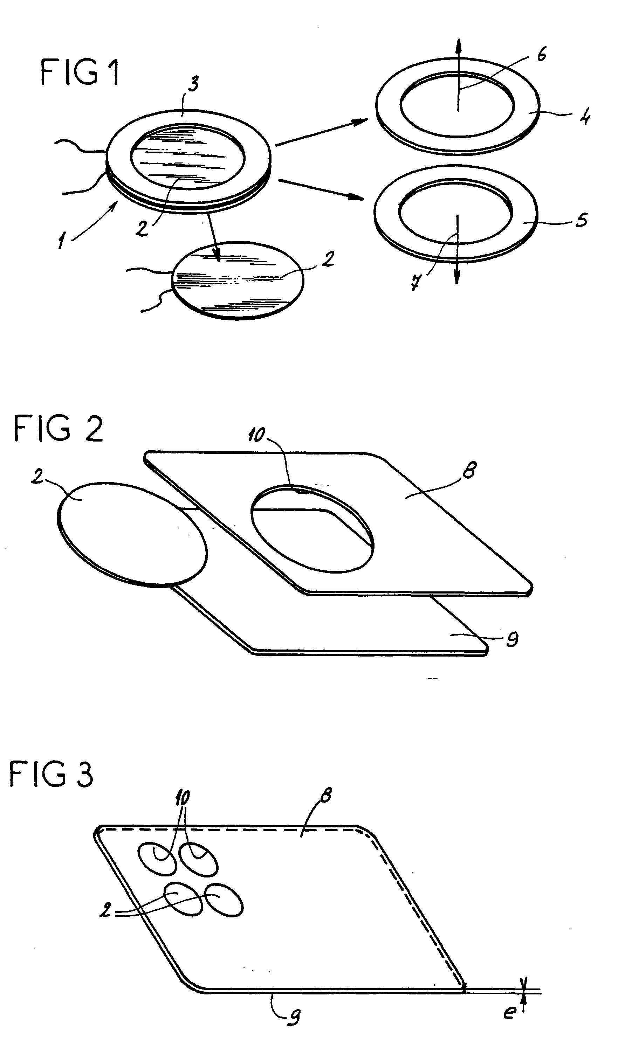

La figure 1 montre, dans sa partie gauche, un transducteur acoustique 1 classique, de type piézo-électrique ou approchant. Le transducteur acoustique 1 comprend une feuille résonante 2, de type piézoélectrique, céramique ou autre, possédant la forme d'un petit disque et entourée d'un anneau de rigidification 3. L' anneau de rigidification 3 résulte de la réunion d'un anneau de pincement supérieur 4 et d'un anneau de pincement inférieur 5, la périphérie de la feuille résonante 2 se trouvant pincée entre les deux anneaux élémentaires 4 et 5.

Partant de ce produit existant, on désolidarise les deux anneaux élémentaires 4 et 5, comme le symbolisent les flèches 6 et 7 sur la partie droite de la figure 1, et l'on isole ainsi la feuille résonante 2. Dans le dispositif objet de la présente invention, cette feuille résonante 2 constitue, par elle-même, un transducteur acoustique.

En se référant aux figures 2 et suivantes, le dispositif objet de l'invention se présente comme une carte, comprenant deux plaques minces rigides 8 et 9 notamment en matière synthétique, de forme extérieure identique sensiblement rectangulaire, qui sont appliquées l'une contre l'autre.

Selon le principe illustré par la figure 2, le transducteur acoustique constitué par la feuille résonante 2 est inséré et pris en sandwich entre les deux plaques 8 et 9. A l'emplacement prévu pour recevoir la feuille résonante 2, l'une des plaques 8 est ajourée comme indiqué en 10, tandis que l'autre plaque 9 reste pleine.

Ce principe de base peut s'appliquer à plusieurs transducteurs acoustiques 2 réunis sur un même dispositif, par exemple quatre transducteurs formés chacun d'une simple feuille résonante, comme l'illustre la figure 3. Dans ce cas, chaque transducteur 2 est limité à une certaine plage de fréquences, dans la gamme de fréquences prévue en DTMF.

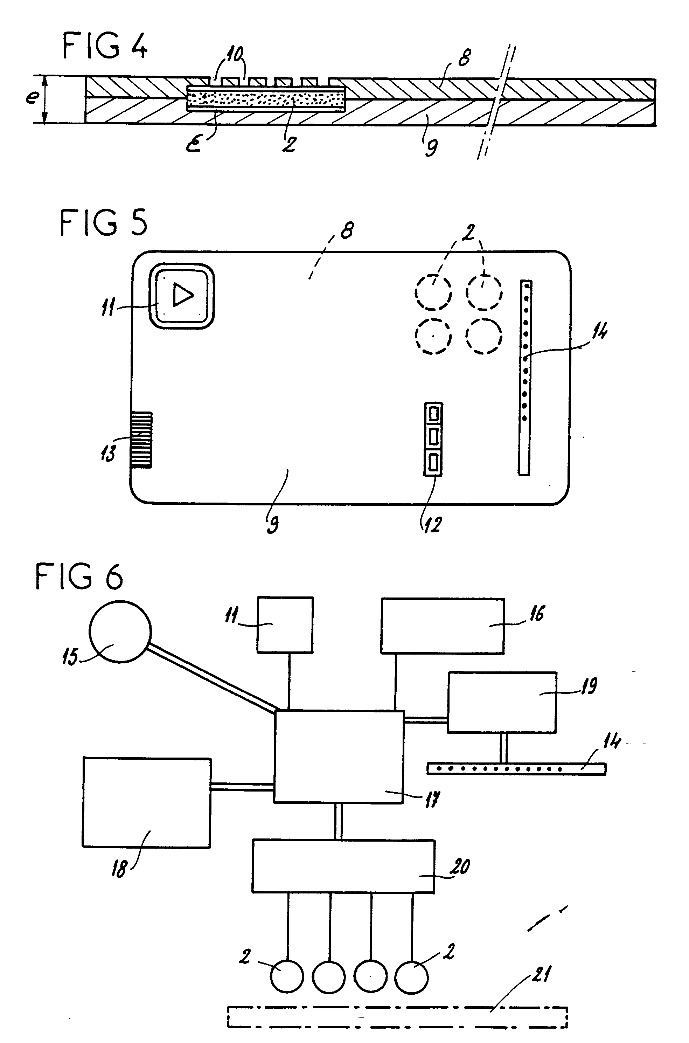

Comme le montre la figure 4, pour le ou chaque transducteur acoustique 2 du dispositif, il n'est pas prévu de cavité de résonance à proprement parler, mais le transducteur 2 est inséré entre les deux plaques 8 et 9 avec un interstice e de quelques microns, évitant que le transducteur 2 ne vienne toucher les deux plaques 8 et 9.

L'application des principes précédemment décrits permet de réaliser en particulier un dispositif de transduction acoustique au format d'une carte de crédit, mais surtout un dispositif dont l'épaisseur e peut être inférieure ou égale à 0,8 millimètre. Le dispositif ainsi constitué est prévu pour être utilisé avec un téléphone, pour la composition automatique de numéros. Pour cette utilisation, le dispositif comprend encore d'autres composants fonctionnels, comme on le décrira maintenant en référence aux figures 5 et 6.

Selon la figure 5, le dispositif qui se présente comme une carte de crédit comporte encore, sur sa face formée par la plaque 9 non ajourée, une touche 11 dont l'actionnement manuel, par exemple par une double pression, lance la séquence de composition automatique d'un numéro de téléphone.

Plusieurs numéros de téléphone peuvent être mémorisés, auquel cas la sélection d'un numéro s'effectue ensuite, par exemple, au moyen d'une pression unique sur la touche 11. Un voyant multiple 12, par exemple du type à cristaux liquides, indique quel est le numéro sélectionné.

Pour certaines applications, les numéros de téléphone doivent pouvoir être programmés. A cet effet, des plots de programmation 13 sont encore prévus.

La face considérée du dispositif peut encore comporter un autre afficheur à cristaux liquides 14, indiquant le nombre d'appels émis ou restants.

La figure 6 est un schéma du dispositif, sous forme de synoptique, indiquant les autres composants internes nécessaires à son fonctionnement. Sur cette figure, les repères 2,11 et 14 ont les significations déjà données plus haut. Le dispositif comprend encore une pile électrique 15, une mémoire de type ROM 16 intégrant le ou les numéros d'appel et le code d'identification du dispositif, un processeur 17 avec programme en mémoire de type ROM, un compteur 18, un circuit 19 de gestion de l'afficheur 14, et un amplificateur 20 monté entre le processeur 17 et les différents transducteurs acoustiques 2.

Le fonctionnement d'ensemble du dispositif précédemment décrit est le suivant :

Le dispositif est appliqué, par sa face que forme la plaque 8 ajourée, contre la partie "microphone" d'un combiné téléphonique symbolisé en 21 sur la figure 6. L'actionnement convenable de la touche 11 lance la composition du numéro de téléphone enregistré dans la mémoire 16, ou d'un numéro de téléphone préalablement sélectionné parmi ceux mémorisés (dans le cas de la mémorisation de plusieurs numéros). La numérotation s'effectue par génération, en fréquence vocale, d'un nombre à N chiffres stocké dans la mémoire 16, avec intervention des différents transducteurs acoustiques 2. A l'autre extrémité de la ligne téléphonique, un système informatique ainsi appelé "décroche". Le dispositif attend une durée prédéterminée, par exemple de l'ordre de 10 secondes, puis déclenche automatiquement l'envoi du code d'identification qu'il possède aussi en mémoire, ainsi que du nombre d'appels déjà générés (certains appels pouvant ne pas aboutir ou être faits par accident). Le cas échéant, ce code d'identification peut être complété par un code connu du seul utilisateur et frappé au clavier du poste téléphonique. Le système informatique qui reçoit le ou les codes précités identifie le dispositif et/ou son utilisateur, ayant émis l'appel, et il autorise l'accès de l'appelant à divers services, informations, dépannages, maintenances, etc..., en fonction des données connues relatives à ce dispositif et/ou à la personne qui en est le possesseur. Par ailleurs, le système informatique décompte le nombre d'appels, mémorisé dans le dispositif et transmis à la suite du code, et il est capable de générer un nouveau crédit d'appels, lorsque le nombre d'appels précédemment alloué va être épuisé.

Le système informatique peut être, notamment, un serveur de données vocales, destiné au grand public ou à une clientèle spécifique, et pouvant avoir une destination de simple information immédiate (par exemple fourniture de la situation d'un compte bancaire) ou, au contraire, de service spécialisé tel que dépannage, maintenance, suivi..., avec réponse personnalisée.

L'invention ne se limite pas aux seules formes d'exécution de ce dispositif de composition automatique de numéros de téléphone qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention :
- en modifiant le nombre de transducteurs acoustiques, par exemple en prévoyant dix transducteurs monofréquence, correspondant aux dix chiffres de 0 à 9 ;
- en réalisant ces transducteurs de façon directe, la réalisation illustrée par la figure 1 et supposant le retrait d'un anneau de rigidification n'étant nullement obligatoire et étant indiquée surtout à titre explicatif ;
- en ajoutant au dispositif des fonctions complémentaires ;
- en modifiant le format extérieur du dispositif, le format "carte de crédit" n'étant pas le seul possible ;
- en destinant ce dispositif à d'autres applications, éventuellement indépendantes de tout serveur informatique, par exemple en le concevant comme une "carte de visite électronique" avec possibilité d'appels de plusieurs numéros spécifiques (bureau, domicile, télécopieur), ou comme carte d'appel associée à un répondeur téléphonique interrogeable à distance avec code d'accès, ou encore en destinant le même dispositif à des jeux ou à des opérations publicitaires.

## Revendications

1. Système permettant de transférer commodément à distance des données d'identification, au moyen d'un réseau téléphonique, comprenant :
- (I) des objets portatifs de faible épaisseur, comprenant :
(a) des moyens d'émission de signaux acoustiques d'identification, de type DTMF, cryptés au moins en partie, dans la gamme des fréquences vocales, lesdits moyens d'émission étant composés :
(i) d'au moins une feuille résonante du type piézo-électrique, libre d'anneau de mise en tension mécanique à sa périphérie,
(ii) de deux plaques rigides de part et d'autre de la feuille résonante, dont l'une, ajourée au droit de la feuille résonante, constitue l'une des faces extérieures de la carte et ménage un léger interstice entre la face extérieure et la feuille résonante,
(b) des moyens, accessibles de l'extérieur de l'objet portatif, pour actionner les moyens d'émission de signaux acoustiques d'identification,
(c) des moyens de mémorisation des données d'identification,
(d) un processeur,
(e) une source d'énergie électrique,
de sorte que la combinaison de ces moyens permet d'émettre des signaux du type DTMF ayant une qualité et une puissance sonore suffisante pour transmettre des données à distance via le réseau téléphonique,
- (II) un équipement téléphonique standard capable de transmettre lesdits signaux acoustiques d'identification,
- (III) un service informatique comprenant des moyens informatiques, connecté au réseau de communication téléphonique et susceptible de recevoir et de traiter le signal d'identification provenant de l'objet portatif,
de sorte que la combinaison et la mise en oeuvre de ces moyens permet une identification à distance, commode, rapide et sure de l'objet portatif et de son titulaire.

2. Dispositif pour le transfert à distance de données d'identification destinés à un service informatique, utilisable en combinaison avec un combiné téléphonique (21), du type comprenant un support (8,9) plat, de faible épaisseur (e), et au moins un transducteur acoustique (2) en forme de petit disque, fonctionnant en générateur de fréquence vocale, et consistant en une feuille résonante (2), de type piézo-électrique, céramique ou similaire, telle que celles habituellement entourées d'un anneau de rigidification (3), mais utilisée ici sans cet anneau,
caractérisé en ce que ledit support plat comprend deux plaques minces rigides (8,9), chaque feuille résonante (2) étant insérée entre lesdites deux plaques minces rigides (8,9) dont l'une au moins (8) est ajourée (en 10) au droit de cette feuille résonante (2), un léger interstice (ε) étant ménagé entre chaque feuille (2) et les deux plaques (8,9).

3. Dispositif selon la revendication 2, caractérisé en ce que le support plat (8,9), dans lequel sont insérés le ou les transducteurs acoustiques (2), est réalisé au format d'une carte de crédit.

4. Dispositif selon la revendication 3, caractérisé en ce que ledit support (8,9) possède une épaisseur (e) inférieure ou égale a environ un millimètre, de préférence inférieure ou égale à 0,8 millimètre.

5. Dispositif selon l'une quelconque des revendications 2 à 4, caractérisé en ce qu'il comprend une pluralité de transducteurs acoustiques (2), chaque transducteur (2) étant limité à une certaine plage de fréquences.

6. Dispositif selon l'une quelconque des revendications 2 à 5, caractérisé en ce que son support (8,9) de faible épaisseur (e) reçoit, outre le ou les transducteurs acoustiques (2), une touche d'actionnement (11) pour le lancement de la numérotation automatique, des moyens de mémorisation (16) d'au moins un numéro de téléphone et de préférence aussi d'un numéro d'identification, une source d'énergie électrique telle que pile (15), un processeur (17) et au moins un amplificateur (20) monté entre le processeur (17) et le ou les transducteurs acoustiques (2).

7. Dispositif selon la revendication 6, caractérisé en ce que, dans le cas d'une mémorisation de plusieurs numéros de téléphone, une face (9) du dispositif 15 comporte un voyant multiple (12), apte à indiquer le numéro sélectionné.

8. Dispositif selon la revendication 6 ou 7, caractérisé en ce qu'une face (9) du dispositif comporte un afficheur (14) apte à indiquer le nombre d'appels émis par le dispositif, ou restant à émettre.

## Patentansprüche

1. System zur bequemen Femübertragung von Identifikationsdaten über ein Telefonnetz, welches folgendes umfaßt:
- (I) dünne tragbare Gegenstände, unter denen folgendes zu finden ist:
(a) Mittel zum Senden akustischer Identifikationssignale vom Typ DTMF, die zumindest teilweise verschlüsselt sind und die im Bereich der vokalen Frequenzen liegen, wobei diese Sendemittel aus folgendem gebildet sind:
(i) mindestens eine resonanzerzeugende Scheibe piezoelektrischer Art, die keinen mechanischen Spannring an ihrem Umfang aufweist,
(ii) zwei starre Plättchen, eines auf jeder Seite der resonanzerzeugenden Scheibe, von denen eines, das eine Öffnung neben der resonanzerzeugenden Scheibe aufweist, eine der Außenflächen der Karte bildet und einen schmalen Spalt zwischen dieser Außenfläche und der resonanzerzeugenden Scheibe einschließt,
(b) Mittel, die vom Äußeren des tragbaren Gegenstandes her zugänglich sind, um die Sendemittel für akustische Identifikationssignale zu aktivieren,
(c) Mittel zum Speichern der Identifikationsdaten,
(d) einen Prozessor,
(e) eine Stromquelle,
derart, daß die Kombination dieser Mittel das Senden von Signalen des Typs DTMF ermöglicht, deren Qualität und Lautstärke ausreichend ist, um das Fernübertragen von Daten über ein Telefonnetz zu gewährleisten,
- (II) eine standardmäßige Telefonausrüstung, die in der Lage ist, die akustischen Identifikationssignale zu übertragen,
- (III) ein an das Telefonnetz angeschlossenes EDV-System, welches Datenverarbeitungsmittel umfaßt und welches in der Lage ist, das vom tragbaren Gegenstand kommende Identifikationssignal zu empfangen und zu verarbeiten,
so, daß die Kombination und Anwendung dieser Mittel eine schnelle, bequeme und sichere Identifikation des tragbaren Gegenstandes und seines Inhabers aus der Ferne ermöglicht.

2. Vorrichtung für die Fernübertragung von Identifikationsdaten, die an ein EDV-System gesendet werden, welches zusammen mit einem Telefongerät (21) anwendbar ist, von der Art, die eine flache Unterlage (8, 9) geringer Stärke (e) sowie mindestens einen akustischen Wandler (2) umfaßt, der die Form einer kleinen Scheibe aufweist und als Generator vokaler Frequenzen funktioniert, bestehend aus einer piezoelektrischen, resonanzerzeugenden Scheibe (2) aus Keramik oder ähnlichem Material, von der Art, die üblicherweise von einem Versteifungsring (3) umgeben ist, aber in diesem Falle ohne Ring verwendet wird,
dadurch gekennzeichnet, daß die flache Unterlage zwei dünne, starre Plättchen (8, 9) umfaßt, wobei jede resonanzerzeugenden Scheibe (2) zwischen diesen zwei starren, dünnen Plättchen (8, 9) eingefügt ist, von denen mindesten eines (8) eine Öffnung (bei 10) gegenüber der resonanzerzeugenden Scheibe (2) aufweist, wobei ein schmaler Spalt (∈) zwischen jeder Scheibe (2) und den zwei Plättchen (8, 9) freigelassen wird.

3. Vorrichtung gemäß Anspruch 2,
dadurch gekennzeichnet, daß die flache Unterlage (8,9), in welcher der akustische Wandler oder die akustischen Wandler (2) eingefügt ist (sind), die Größe einer Kreditkarte aufweist.

4. Vorrichtung gemäß Anspruch 3,
dadurch gekennzeichnet, daß die Stärke (e) der Unterlage (8, 9) kleiner als oder etwa ein Millimeter ist, bevorzugterweise kleiner oder gleich 0,8 Millimeter.

5. Vorrichtung gemäß einem der Ansprüche 2 bis 4,
dadurch gekennzeichnet, daß sie eine Vielzahl akustischer Wandler (2) umfaßt, wobei jeder dieser Wandler (2) auf einen bestimmten Frequenzbereich begrenzt ist.

6. Vorrichtung gemäß einem der Ansprüche 2 bis 5,
dadurch gekennzeichnet, daß die Unterlage (8, 9) geringer Stärke (e) nebst des oder der akustischen Wandler (2) über einen Betätigungsknopf (11) zum Auslösen der automatischen Nummerierung, über Speichermittel (16) für mindestens eine Telefonnummer sowie bevorzugterweise ebenfalls einer Identifikationsnummer, über eine Energiequelle wie eine Batterie (15), über einen Prozessor (17) und über mindestens einen Verstärker (20) verfügt, der zwischen Prozessor (17) und dem akustischen Wandler oder den akustischen Wandlern (2) eingebaut ist.

7. Vorrichtung gemäß Anspruch 6,
dadurch gekennzeichnet, daß, wenn mehrere Telefonnummern gespeichert werden, eine Fläche (9) der Vorrichtung (15) eine Mehrfachanzeige (12) aufweist, welche die gewählte Nummer anzeigen kann.

8. Vorrichtung gemäß einem der Ansprüche 6 oder 7,
dadurch gekennzeichnet, daß eine Fläche (9) der Vorrichtung über eine Anzeige (14) verfügt, die in der Lage ist, die Zahl der von der Vorrichtung gesendeten oder noch zu sendende Anrufe anzuzeigen.

## Claims

1. System allowing convenient distant transfer of identification data, by means of a telephone network, comprising:
- (I) portable objects of small thickness, comprising:
(a) means for transmitting acoustic identification signals, of DTMF type, encrypted at least in part, within the range of voice frequencies, the said means of transmission being composed:
(i) of at least one resonant sheet of the piezoelectric type, free of mechanical tensioning ring at its periphery,
(ii) of two rigid plates either side of the resonant sheet, one of which, perforated in line with the resonant sheet, constitutes one of the outside faces of the card and allows a slight gap between the outside face and the resonant sheet,
(b) means, accessible from outside the portable object, for actuating the means for transmitting acoustic identification signals,
(c) means for storing the identification data,
(d) a processor,
(e) an electric power supply,
such that the combination of these means makes it possible to transmit signals of the DTMF type having sufficient quality and audio power to transmit data some distance via the telephone network,
- (II) standard telephone equipment capable of transmitting the said acoustic identification signals,
- (III) a computer service comprising computer means, connected to the telephone communication network and capable of receiving and processing the identification signal from the portable object,
such that the combination and the implementation of these means allows distant, convenient, fast and certain identification of the portable object and of its owner.

2. Device for the distant transfer of identification data intended for a computer service, usable in combination with a telephone handset (21), of the type comprising a flat support (8, 9) of small thickness (c), and at least one acoustic transducer (2) in the form of a small disc, operating as a voice frequency generator, and consisting of a resonant sheet (?) of the piezoelectric type, ceramic or the like, such as those customarily surrounded by a stiffening ring (3), but used here without this ring,
characterized in that the said flat support comprises two stiff thin plates (8, 9), each resonant sheet (2) being inserted between the said two stiff thin plates (8, 9), one at least (8) of which is perforated (at 10) in line with this resonant sheet (2), a slight gap (ε) being allowed between each sheet (2) and the two plates (8, 9) .

3. Device according to Claim 2, characterized in that the flat support (8, 9) , in which the acoustic. transducer or transducers (2) are inserted, is made in the format of a credit card.

4. Device according to Claim 3, characterized in that the said support (8, 9) possesses a thickness (e) less than or equal to around one millimetre, preferably less than or equal to 0.8 millimetre.

5. Device according to any one of Claims 2 to 4, characterized in that it comprises a plurality of acoustic transducers (2) each transducer (2) being limited to a certain frequency span.

6. Device according to any one of Claims 2 to 5, characterized in that its support (8, 9) of small thickness (e) receives, in addition to the acoustic transducer or transducers (2), an actuation button (11) for initiating automatic dialling, means (16) for storing at least one telephone number and preferably also an identification number, an electrical power supply such as a battery (15), a processor (17) and at least one amplifier (20) which is mounted between the processor (17) and the acoustic transducer or transducers (2) .

7. Device according to Claim 6, characterized in that, in the case of a storage of several tolephone numbers, a face (9) of the device 15 comprises a multiple light (12) able to indicate the number selected.

8. Device according to Claim 6 or 7, characterized in that a face (9) of the device comprises a display (14) able to indicate the number of calls transmitted by the device, or remaining to be transmitted.
